# EUROPEAN PATENT APPLICATION

(11) **EP 1 835 738 A2**
(43) Date of publication of application: **19.09.2007**
(21) Application number: 07004240.3
(22) Date of filing: 01.03.2007
(51) Int. Cl.: H04N 5/913

(54) **Apparatus, method, and computer program product for recording contents**

(30) Priority: 13.03.2006 JP 2006068012
(71) Applicant: KABUSHIKI KAISHA TOSHIBA, Tokyo 105-8001 (JP)
(72) Inventor: Isozaki, Hiroshi, Minato-ku Tokyo 105-8001 (JP); Nakashika, Masahiro, Minato-ku Tokyo 105-8001 (JP); Tsumagari, Yasufumi, Minato-ku Tokyo 105-8001 (JP); Toyama, Haruhiko, Minato-ku Tokyo 105-8001 (JP); Kamibayashi, Tooru, Minato-ku Tokyo 105-8001 (JP); Kamio, Hiroyuki, Minato-ku Tokyo 105-8001 (JP)
(74) Representative: HOFFMANN EITLE

(57) **Abstract**

A content recording apparatus (100; 1400; 1600) includes a reading unit (112) that reads, from a recording medium (140), a title key, a title content in plane text, an encrypted title content, an adjunct data, and a plain text adjunct data. The content recording apparatus (100; 1400; 1600) further includes a playlist generating unit (128; 1428; 1628) that generates a first playlist including the encrypted adjunct data and the plain text adjunct data, and generates a second playlist including only the plain text adjunct data. Each of the first playlist and the second playlist defines an order in which the title content as a playback target is to be played back. The content recording apparatus (100; 1400; 1600) further includes a recording unit (113) that records the first playlist and the second playlist onto the recording medium (140).

## Description

### CROSS-REFERENCE TO RELATED APPLICATIONS

This application is based upon and claims the benefit of priority from the prior Japanese Patent Application No. 2006-68012, filed on Mar. 13, 2006; the entire contents of which are incorporated herein by reference.

### BACKGROUND OF THE INVENTION

### 1. Field of the Invention

The present invention relates to a content recording apparatus, a content recording method, and a content recording computer program product for recording adjunct data, which is data of a part of a title content, onto a recording medium that has recorded thereon a title key used for encrypting the title content as a content of a program and content data that includes the title content that has been encrypted with the title key and copy control information that indicates a limitation related to copying of the title content.

### 2. Description of the Related Art

As disclosed in, for example, Advanced Access Content System (AACS) Recordable Video Book Revision 0.90, a technique for preventing illegitimate copying of contents recorded on a recording medium such as a DVD medium is conventionally known. According to this technique, an encryption processing is performed on each of a plurality of title contents, which are image contents or audio contents of programs, using a title key that is different for each of the title contents, and the encrypted title contents are recorded onto a DVD medium.

According to this conventional technique, each of the plurality of title keys is encrypted with a device key provided for each recording and playback apparatus, such as a DVD recorder, that legitimately records and plays back contents, so that each encrypted title key is registered into a title key file and recorded onto a DVD medium. When each title content is to be played back, the encrypted title key registered in the title key file is decrypted with the device key of the recording and playback apparatus used for playing back the title content, and the title content is decrypted with the decrypted title key and is played back.

When a rewritable DVD medium is used, and a part of the title contents has been deleted, the title key file should be also updated. To be more specific, the title key file is decrypted first, and the title key file, from which the title key corresponding to the title content that has been deleted from the DVD medium is deleted, is encrypted once again with the device key, and recorded onto the DVD medium. With this arrangement, it is possible to prevent an attack from occurring where the title key corresponding to the deleted title content is copied in advance so as to illegitimately play back the deleted title content, using the copied title key.

This conventional technique is useful in recording a content that is input from an external source via a broadcast wave or the like, onto a recording medium such as a DVD medium, while protecting the content, and preventing illegitimate use of the content.

However, the conventional technique does not provide sufficient protection for a content (adjunct data) that is newly generated by a recording and playback apparatus, as being derived from an Audio-Visual (AV) content, which is data obtained by compressing a content including video data or audio data, using an encoding method such as the Moving Picture Experts Group phase 2 (MPEG-2) or H. 264.

Examples of such adjunct data include data used in a menu screen, for example, a thumbnail image or an audio file. The adjunct data may be data that includes image data that has been compressed in an image compression format such as the Joint Photographic Experts Group (JPEG) or the Graphics Interchange Format (GIF) and/or audio data that has been digitalized using an audio compression format such as the Linear Pulse Code Modulation (LPCM), and further using the Moving Picture Experts Group Audio Layer 3 (MP3). In other words, the adjunct data is an image/audio content that is recorded on a DVD medium in a file format that is different from that of an AV content. An example of the method for generating adjunct data includes steps of, for example when an AV content of which the copyright is protected has been encrypted with a title key, decrypting the AV content by the title key, extracting a scene from the AV content as an image file, converting the extracted image file into image data, recording the image data onto a DVD medium, and using the image file as a thumbnail. With this method, a menu screen that shows a list of title contents is generated.

Conventionally, the usage of such adjunct data has been limited to use as thumbnail images. Because such adjunct data is output as a file having a resolution level lower than the resolution level of the original AV content from which the adjunct data is generated, the usage of adjunct data has been limited. Thus, there have been few problems related to the copyrights.

However, when such adjunct data is used as a background image of a menu screen or the like, the adjunct data may be recorded on a DVD medium in plain text. In such a situation, it becomes possible for an illegitimate user to copy the adjunct data from the DVD medium onto another recording medium such as a hard disk, or to illegitimately distribute the adjunct data over the Internet or the like, beyond the scope of fair uses in section 107 of the copyright law in the United States or private uses defined in Article 30 of the Copyright Law of Japan. Because the adjunct data is a part of an AV content from which the adjunct data is generated, when the adjunct data is distributed without being protected, it will mean that the AV content is not actually protected, even if the AV content is protected as a content. Consequently, it is an important issue to protect the copyright of the adjunct data.

For this reason, it is necessary to protect the copyrights of the adjunct data and the contents, even when a playlist defining the order in which the contents are played back is generated using adjunct data, and recorded on a DVD medium. As for DVD players used for playing back DVD media, both DVD players that are capable of and DVD players that are not capable of the copyright protection function for DVDs are distributed in the market. Thus, when a content is protected with the copyright protection function being applied to the adjunct data in the playlist, there is a possibility that the DVD players that are not capable of the copyright protection function may not be able to play back the content, which the DVD players are normally supposed to be able to play back, because of the playlist including the adjunct data.

### SUMMARY OF THE INVENTION

According to one aspect of the present invention, a content recording apparatus includes a reading unit that reads, from a recording medium, a title content in plain text as a content of a program, a title key for encrypting the title content, an encrypted title content which is obtained by encrypting.the title content with the title key, an adjunct data generated as being derived from the title content and an encrypted in correspondence with the encrypted title content, and plain text adjunct data that is data in plain text generated as being derived from the title content in plain text; a playlist generating unit that generates a first playlist including the encrypted adjunct data and the plain text adjunct data in correspondence with the title content as the playback target, and generates a second playlist including only the plain text adjunct data in correspondence with the title content in plain text from the adjunct data in correspondence with the title content as the playback target, wherein each of the first playlist and the second playlist defines an order in which the title content as a playback target is to be played back; and a recording unit that records the first playlist and the second playlist onto the recording medium.

According to another aspect of the present invention, a content recording method includes reading, from a recording medium, a title content in plain text as a content of a program, a title key for encrypting the title content, an encrypted title content which is obtained by encrypting the title content with the title key, an adjunct data generated as being derived from the title content and encrypted in correspondence with the encrypted title content, and a plain text adjunct data that is data in plain text generated as being derived from the title content in plain text; generating a first playlist including the encrypted adjunct data and the plain text adjunct data in correspondence with the title content as the playback target; generating a second playlist including only the plain text adjunct data in correspondence with the title content in plain text from the adjunct data in correspondence with the title content as the playback target, wherein each of the first playlist and the second playlist defines an order in which the title content as a playback target is to be played back; and recording the first playlist and the second playlist onto the recording medium.

A computer program product according to still another aspect of the present invention causes a computer to perform the method according to the present invention.

### BRIEF DESCRIPTION OF THE DRAWINGS

Fig. 1 is a block diagram of a DVD recorder according to a first embodiment of the invention;
Fig. 2 is a schematic diagram of a data structure of AV contents, a title key file, and a management file;
Fig. 3 is a drawing for explaining a data structure of adjunct data;
Fig. 4 is a drawing for explaining selection of a title key;
Fig. 5 is a flow chart of a procedure in a title content recording processing according to the first embodiment;
Fig. 6A is a flow chart of a procedure in an adjunct data generation processing and a playlist generation processing according to the first embodiment;
Fig. 6B is a flow chart of the procedure in the adjunct data generation processing and the playlist generation processing according to the first embodiment;
Fig. 7 is a flow chart of a procedure in a key selection processing according to the first embodiment;
Fig. 8 is a schematic drawing of an example related to data referred to by a playlist #2;
Fig. 9 is a schematic drawing of an example of a menu screen generated with the playlist #2;
Fig. 10 is a schematic drawing of an example related to data referred to by a playlist #3;
Fig. 11 is a schematic drawing of an example of a menu screen generated with the playlist #3;
Fig. 12 is a schematic drawing of an example related to data that is referred to by the playlist #3, when image data in plain text is used in place of encrypted adjunct data;
Fig. 13 is a schematic drawing of an example of a menu screen generated with the playlist #3, when image data in plain text is used in place of encrypted adjunct data;
Fig. 14 is a block diagram of a DVD recorder according to a second embodiment;
Fig. 15 is a flow chart of a procedure in a playlist generation processing according to the second embodiment;
Fig. 16 is a block diagram of a DVD recorder according to a third embodiment of the invention; and
Fig. 17 is a flow chart of a procedure in a playlist generation processing according to the third embodiment.

### DETAILED DESCRIPTION OF THE INVENTION

Exemplary embodiments of a content recording apparatus, a content recording method, and a content recording computer program according to the present invention will be explained in details, with reference to accompanying drawings.

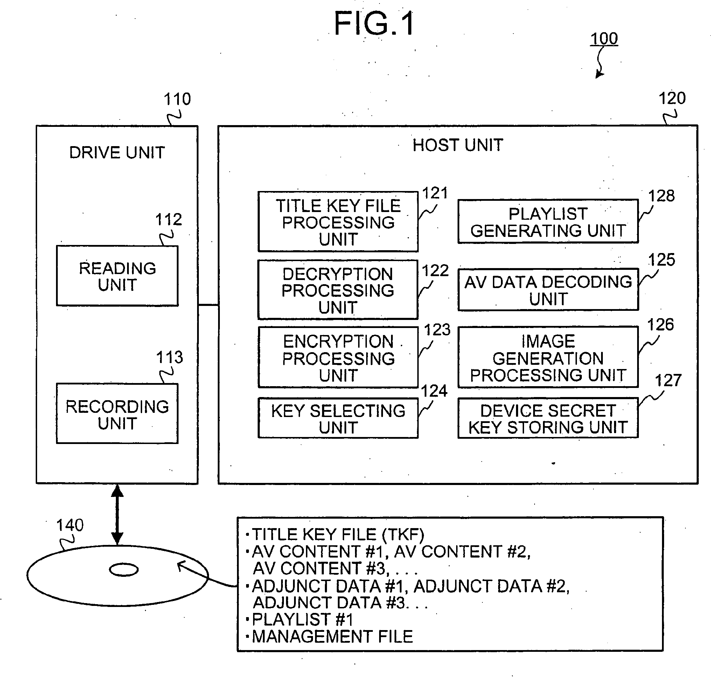

The content recording and playback apparatus 100 may be, for example, a DVD/High Definition DVD (HD DVD) recorder that records and plays back data onto a recordable DVD or HD DVD medium (hereinafter, the "DVD medium 140"). The content recording and playback apparatus 100 according to the first embodiment (hereinafter, the "DVD recorder 100") includes, as shown in Fig. 1, a drive unit 110 that records data onto the DVD medium 140 and also reads data from the DVD medium 140, and a host unit 120 that performs an encryption processing and a decryption processing of a title content and a title key, a processing of generating adjunct data from a decrypted title content, and a processing of generating a playlist.
The drive unit 110 and the host unit 120 are connected to each other by a general-use bus or a special proprietary bus.

The DVD recorder 100 according to the first embodiment is not configured so as to store a content into a hard disk drive device (HDD), however, it is also acceptable to configure the DVD recorder 100 so as to include an HDD for storing a title content therein.

As shown in Fig. 1, the DVD medium 140 has recorded thereon, in the form of files, a title key file (TKF), a plurality of AV contents (an AV content #1, an AV content #2, and an AV content #3), pieces of adjunct data (adjunct data #1, adjunct data #2, ...), a playlist (a playlist #1), and a management file. In the description of the first embodiment, an example in which the DVD medium 140 is a rewritable medium on which it is possible to rewrite the title key file will be used in the explanation.

Each of the AV contents is a content that includes an encrypted title content obtained by encrypting, for each of programs, a title content with a title key and copy control information. The title content is a unit of an image content or an audio content that serves as a program. For example, a content for one movie forms one title content. The title content includes video data and/or audio data, which is data that has been compressed using an encoding method such as the MPEG 2 or the H. 264.

The title key file is a file that has registered therein a plurality of encrypted title keys obtained by encrypting title keys respectively corresponding to a plurality of title contents, with a device secret key. Each of the title keys is a key used for encrypting a title content. According to the first embodiment, the title key is different for each of the title contents. However, the present invention is not limited to this arrangement. It is acceptable to encrypt a plurality of title contents with one title key used in common.

Each piece of adjunct data is data that is generated as being derived from a title content. Examples of the adjunct data include data used in a menu screen, for example, a thumbnail image or an audio file, that is generated from a title content. The adjunct data may be data that includes image data that has been compressed in an image compression format such as the JPEG or the GIF and/or audio data that has been digitalized using an audio compression format such as the LPCM, and further using the MP3. In other words, the adjunct data is a content that is recordable onto the DVD medium 140 in a file format that is different from that of the title content. In the following explanation, an image file is used as an example of the adjunct data, however, the present invention is applicable to an example where a file other than an image file is used as the adjunct data.

The playlist defines the order in which the title content being the playback target is to be played back. For each of the title contents, the playlist includes a piece of adjunct data that corresponds to the title content. The details of the playlist will be explained later.

The management file is a file that manages the title keys that correspond to the encrypted title contents included in the AV contents.

The format of the DVD medium used as the target of the DVD recorder 100 according to the first embodiment is a DVD medium that is in compliant with the HD DVD Video Recording standard, however, the present invention is not necessarily limited to the DVD medium having such a format.

Next, various types of data recorded on the DVD medium 140 will be explained.

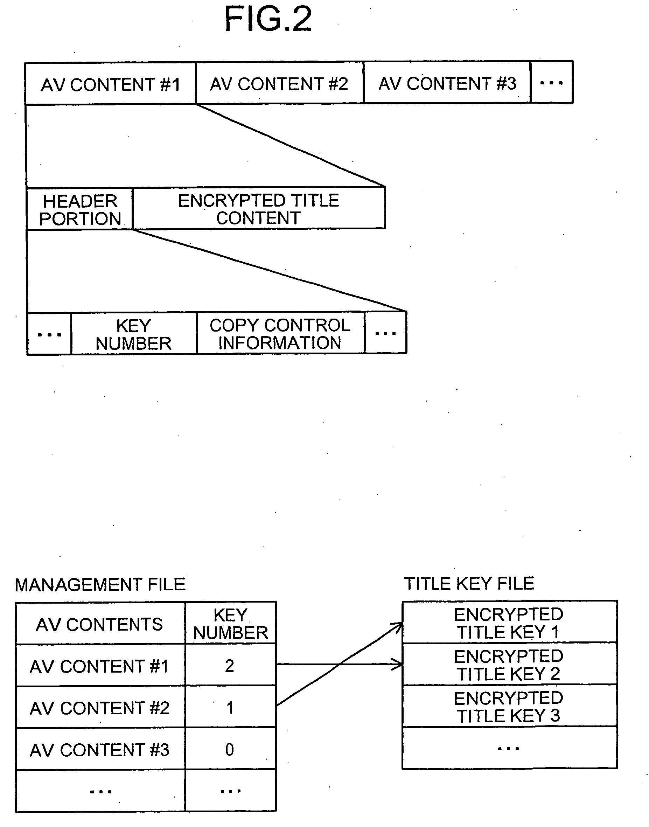

The AV contents are configured so that one program forms one AV content. As shown in Fig. 2, the AV contents are a set of groups of a plurality of packets that each include a set made up of a header portion and an encrypted title content.

The encrypted title content is a content obtained by encrypting a title content with a title key and copy control information included in the title content. The title key is encrypted with a device secret key assigned to each DVD recorder 100 by a license organization and recorded as a title key file.

As shown in Fig. 2, the header portion is structured so as to include a key number and the copy control information. The key number is a pointer that indicates the record position, within the title key file, of the encrypted title key having been obtained by encrypting the title key used for encrypting the title content, the record position being counted from the beginning of the title key file. For example, in Fig. 2, if the key number for the AV content #1 is "3", the encrypted title key that corresponds to the title content in the AV content #1 is an encrypted title key 3 that is positioned at the third record position counted from the beginning of the title key file.

If the title content is in plain text, the AV content includes the title content in plain text, instead of the title content that has been encrypted. In such a situation, no encryption process using a title key has been performed, and the key number is set to "0". In other words, with this arrangement, it is possible to judge whether a title content is in plain text or has been encrypted, by checking to see whether "0" or a number other than "0" is set into the key number field of the AV content.

In the description of the first embodiment, the key number that is used when the title content is in plain text is "0", however, the present invention is not limited to this example. It is acceptable to use another arbitrary value that does not correspond to any of the record positions counted from the beginning of the title key file.

The copy control information is information that indicates a limitation related to copying of the title content. For example, the copy control information may be set as any one of "Copy Free", "Copy Never", "No More Copies", "Copy One Generation", and "Encryption Plus Non-assertion (EPN) " .

"Copy Free" means that copying of the title content is allowed without any limitation. "Copy Never" means that copying of the title content is not allowed. "Copy One Generation" means that copying of the title content is allowed only for one generation. "No More Copies" means that copying of the title content is no longer allowed because one generation of the title content, the copy control information thereof is indicated "Copy One Generation", has already been copied. It means that no more copies are allowed in terms of the generation management. In other words, copying is prohibited. "Encryption Plus Non-assertion (EPN)" means that an encryption process has been performed on the title content so that the copyright is protected, but there is no limitation, by the number or by the generation, related to copying. When the copy control information indicates "Copy Free", the title content is not encrypted, whereas when the copy control information is of any other type, the title content is encrypted. Because the copy control information is used in the encryption process of the title content, it is possible to prevent any illegitimate modifications of the copy control information.

As shown in Fig. 2, registered in the title key file are the plurality of encrypted title keys that are obtained by encrypting, with the device secret key, the title keys being corresponding to the plurality of title contents.

As shown in Fig. 2, the management file has registered therein the key numbers each of which indicates, for a corresponding one of the AV contents, the record position, within the title key file, of the corresponding encrypted title key, the record position being counted from the beginning of the title key file. For example, in Fig. 2, because the key number for the AV content #1 is "2", the encrypted title key that corresponds to the title content in the AV content #1 is an encrypted title key 2 that is positioned at the second record position counted from the beginning of the title key file.

Like the key number in the header portion explained above, when the title content is in plain text, the key number for the corresponding AV content in the management file is set to "0". With this arrangement, it is possible to judge whether a title content included in an AV content is in plain text or has been encrypted, by checking to see whether "0" or a number other than "0" is set into the key number field of the management file.

In the description of the first embodiment, the encrypted title key that corresponds to the encrypted title content of the AV content is indicated by both the key number in the management file and the key number in the header portion of the AV content. However, another arrangement is acceptable in which the encrypted title key that corresponds to the encrypted title content is indicated only by one of them.

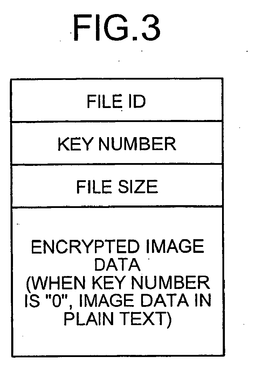

As shown in Fig. 3, the adjunct data (i.e. image data) has been encapsulated. The encapsulated file includes a file ID, the key number of the title key used in the encryption process, the file size of the file, and encrypted image data (i.e. encrypted adjunct data). The file ID is set to a predetermined value indicating that the file includes encrypted image data. The key number is a pointer that indicates the record position, within the title key file, of the title key used in the encryption process, the record position being counted from the beginning of the title key file. For example, if the value in the key number field is "5", it means that the encryption processing has been performed using the title key that is recorded in the fifth record position in the title key file. The file size indicates the size of the image data in plain text (i.e. plain text adjunct data) prior to the encryption processing. The encrypted image data is compressed image data that has been encrypted, however, when the key number is "0", image data in plain text (i.e. plain text adjunct data) is registered.

The encapsulated file may have a data structure so as to include the copy control information, in addition to these types of information described above. In such a situation, the adjunct data may be encrypted with the title key and the copy control information.

The extension of the encapsulated file that includes the encrypted adjunct data may be replaced with an extension that is different from an extension in a specific format that indicates adjunct data in plain text or may have another extension added to the file name to which the extension is attached. For example, when the file name is "fileA", the extension of the encapsulated file is "aaa", and the extension for plain text is "jpg", the name of the encapsulated file may be "fileA.aaa", or may be "fileA.jpg.aaa".

The DVD medium 140 according to the first embodiment has recorded thereon, in a mixed manner, both AV contents that include title contents that have been encrypted and AV contents that include title contents that are in plain text. Thus, as for the adjunct data, the embodiment is based on a premise that both encrypted adjunct data that has been recorded as being derived from an encrypted title content and adjunct data in plain text that has been recorded as being derived from a title content in plain text are recorded in a mixed manner.

Returning to the description of Fig. 1, the drive unit 110 includes, as the main constituent elements, a reading unit 112 that directly reads data from the DVD medium 140 and a recording unit 113 that directly records data onto the DVD medium 140.

As shown in Fig. 1, The host unit 120 is configured so as to include, as the main constituent elements, a title key processing unit 121, a decryption processing unit 122, an encryption processing unit 123, a key selecting unit 124, an AV data decoding unit 125, an image generation processing unit 126, a device secret key storing unit 127, and a playlist generating unit 128.

The key selecting unit 124 is a processing unit that selects an appropriate title key, out of the title keys registered in the title key file, so as to select the title key that is used for decrypting the title content. The key selecting unit 124 also performs a processing to select a title key used for encrypting adjunct data during the recording processing of a content. Further, during the recording processing of a content, the key selecting unit 124 performs the processing to generate a title key used for encrypting the adjunct data, when the copy control information of the title content indicates that the copying has a limitation, such as "Copy One Generation" (copying is allowed for one generation) or "EPN".

In addition, during the playback processing of a content, the key selecting unit 124 performs a processing of selecting an appropriate encrypted title key, out of the encrypted title keys registered in the title key file, so as to select the title key for decrypting the encrypted title content or the adjunct data.

Next, the encryption process of the adjunct data will be explained.

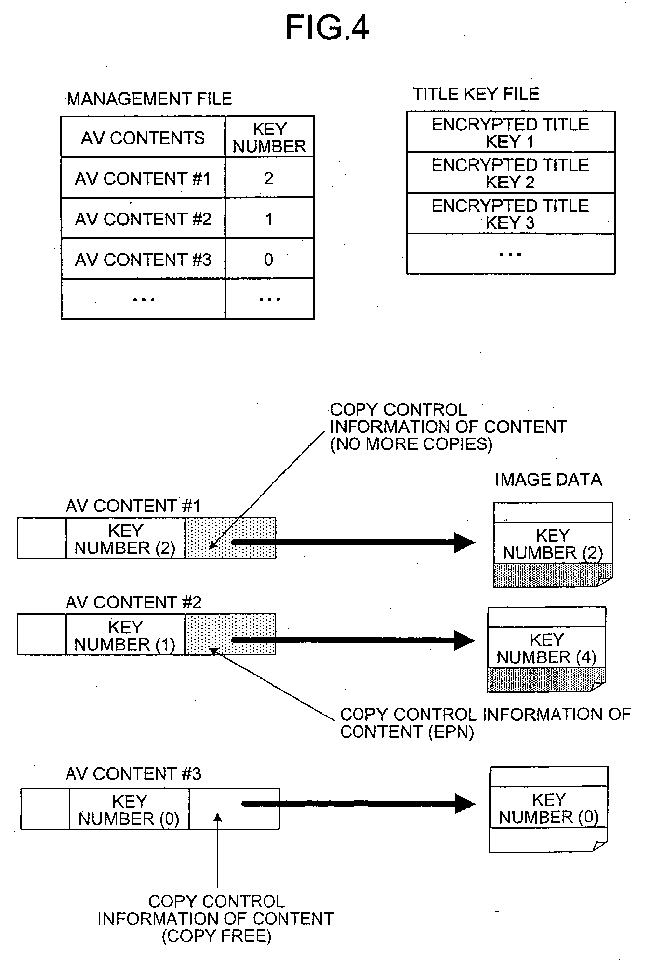

In the example shown in Fig. 4, the AV content #1, the AV content #2, and the AV content #3 have been recorded. The title content in the AV content #1 has the key number "2" and has been therefore encrypted with the encrypted title key 2 that is recorded at the second record position in the title key file. The state of the content is "No More Copies". The AV content #2 has the key number "1" and has been therefore encrypted with the encrypted title key 1 that is recorded at the first record position in the title key file. The state of the content is "EPN". The AV content #3 has the key number "0", and it means that the content is in plain text. The state of the content is "Copy Free".

As shown in Fig. 4, the key selecting unit 124 according to the first embodiment encrypts the adjunct data generated from the title content in the AV content #1 that has a copy limitation indicated by the copy control information such as "No More Copies" or the like, with the encrypted title key 2 that is used in the encryption processing of the title content in the AV content #1.

On the other hand, as shown in Fig. 4, when encrypting the adjunct data that is generated from the title content in the AV content #2, which has no copy limitation or of which copying is allowed with a limitation, indicated by the copy control information such as "EPN" or the like, the key selecting unit 124 according to the first embodiment newly generates a title key that corresponds to the key number 4, being independent on the title key for the AV content #2, and registers the generated title key into a title key file, and then encrypts the adjunct data with the newly generated title key.

In the situation shown in Fig. 4, only three encrypted title keys have been registered in the title key file. Thus, the newly generated title key is encrypted with the device secret key and recorded into the fourth record position, which is a vacant record field in the title key file.
Further, the adjunct data is encrypted with the newly generated title key, and the key number field is set with the number "4". The adjunct data is encapsulated so as to form a single file and is recorded onto the DVD medium 140. The specific processing performed by the key selecting unit 124 to select the key used in the encryption process of the adjunct data will be explained later.

Returning to the description of Fig. 1, the encryption processing unit 123 is a processing unit that encrypts the title content using the title key selected by the key selecting unit 124. Also, the encryption processing unit 123 performs a processing of encrypting the adjunct data with the title key that is selected or generated by the key selecting unit 124.

The decryption processing unit 122 is a processing unit that decrypts the encrypted title content with the title key selected by the key selecting unit 124.

The title key file processing unit 121 is a processing unit that generates the title key stored in the title key file, decrypts the title key that has been encrypted (i.e. the encrypted title key), and encrypts a title key and registers the encrypted title key into the title key file.

The playlist generating unit 128 is a processing unit that generates the playlist. According to the first embodiment, the playlist generating unit 128 generates a first playlist that includes all the pieces of adjunct data that are in correspondence with the title content being the playback target, out of the title contents recorded on the DVD medium 140. In other words, the first playlist includes both the adjunct data that has been encrypted and the adjunct data that are in plain text, in correspondence with the title content being the playback target. In addition, the playlist generating unit 128 according to the first embodiment generates a second playlist that includes only the adjunct data in plain text that is in correspondence with the title content in plain text, out of the pieces of adjunct data that are in correspondence with the title content being the playback target.

Further, when generating the second playlist, the playlist generating unit 128 generates the file name of the second playlist so that the suffix number appended to file name of the second playlist has a larger value than a suffix number appended to the file name of the first playlist.

The AV data decoding unit 125 is a processing unit that decodes a compressed title content or compressed adjunct data so as to convert the data into data in an uncompressed format. The image generation processing unit 126 is a processing unit that detects, as image data, a necessary portion of the title content in the uncompressed format, based on a specification from a user or the like, extracts the detected image data, and converts the extracted image data into a compressed image format so as to generate adjunct data.

The device secret key storing unit 127 is a storing medium, such as a memory, that conceals and stores therein the device secret key used for encrypting and decrypting the title key, the device secret key having been assigned to the manufacturer of the DVD recorder 100 by a license organization.

According to the first embodiment, the DVD recorder 100 is configured as described above so that the adjunct data and the playlists can be generated. However, the present invention is not limited to this configuration. It is acceptable to configure the DVD recorder 100 so as to include other processing units that have other functions such as a playback function.

When a title content is in plain text, the adjunct data generated from the plain text title content is also in plain text. Thus, the single DVD medium 140 may have recorded thereon both adjunct data that has been encrypted and adjunct data that is in plain text, in a mixed manner.

A DVD recorder that records only title contents in plain text does not have to store therein a device secret key. Let us assume that such a DVD recorder that stores therein no device secret key has recorded a content onto a blank DVD medium, has generated pieces of image data as adjunct data from the content, and has generated a menu screen in which the pieces of image data are used as thumbnails.
Subsequently, the DVD medium is inserted into another DVD recorder that stores therein a device secret key, and an encrypted title content is additionally written onto the DVD medium. Then, an encryption processing is performed on image data (i.e. adjunct data) that is generated as being derived from the encrypted title content. Thus, the menu screen includes image data that has been encrypted. Further, when the DVD medium 140 having the additional recording is inserted again, for a playback process, into the DVD recorder that stores therein no device secret key, the DVD recorder is not able to decrypt the encrypted adjunct data, which is the image data that has been encrypted. In this situation, the DVD recorder storing therein no device secret key is not able to display the menu screen that includes the encrypted image data. As a result, the DVD recorder is not able to play back even the content that has been recorded by the DVD recorder itself.

To cope with this problem, according to the first embodiment, the playlist generating unit 128 generates the first playlist that includes all the pieces of adjunct data that are in correspondence with the title content being the playback target, out of the title contents recorded on the DVD medium 140. In other words, the first playlist includes both the adjunct data that has been encrypted and the adjunct data in plain text, in correspondence with the title content being the playback target. In addition, the playlist generating unit 128 generates the second playlist that includes only the adjunct data in plain text that corresponds to the title content in plain text, out of the pieces of adjunct data that are in correspondence with the title content being the playback target. Further, the playlist generating unit 128 generates the file name of the second playlist with the suffix number appended thereto, so that the suffix number appended to the file name of the second playlist has a larger value than the suffix number appended to the file name of the first playlist. Thus, the problem described above is solved.

To be more specific, when a plurality of playlists have been recorded on the DVD medium 140, a DVD player will load first a playlist having the largest suffix number appended to the file name of the playlist. Thus, because the playlist generating unit 128 generates the file name of the second playlist in the manner described above, the second playlist that includes only the adjunct data in plain text will be loaded and played back before the first playlist is loaded and played back. Accordingly, even a DVD player that is not capable of the copyright protection function is able to play back, according to the playlist, only the title content in plain text, from the DVD medium 140 on which both the title content that has been encrypted and the title content that is in plain text have been recorded in a mixed manner. Consequently, it is possible to prevent the title list including the encrypted adjunct data from making it impossible to play back even the title content in plain text, the playback of which is normally supposed to be possible.

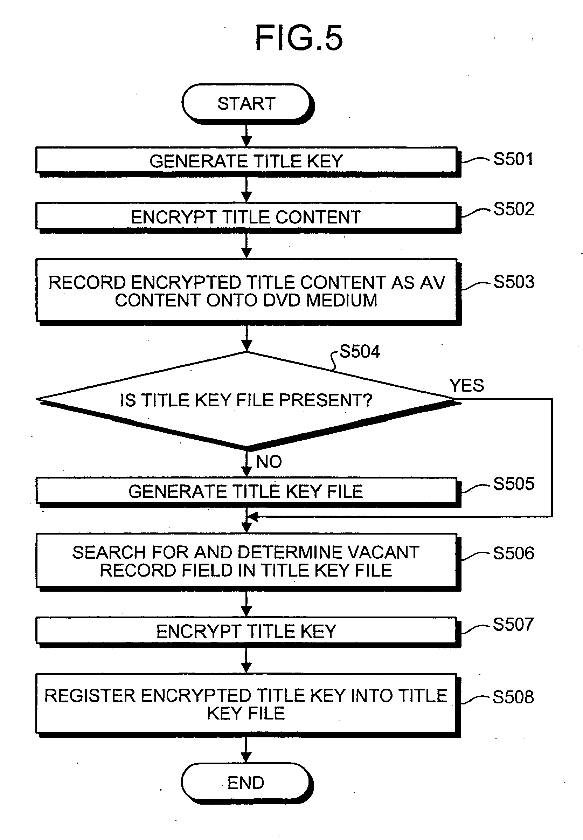

Next, the playlist generation processing performed by the DVD recorder according to the first embodiment having the configuration described above will be explained. The DVD recorder according to the first embodiment performs the processing of generating a title content, generating adjunct data, and generating a playlist, in the stated order. Thus, the recording processing of a title content will be explained first. Fig. 5 is a flow chart of a procedure in the title content recording processing performed by the DVD recorder according to the first embodiment.

First, the title key file processing unit 121 generates a title key (step S501). Next, the encryption processing unit 123 encrypts a title content with the title key and copy control information to be registered (step S502). The recording unit 113 then records the encrypted title content onto the DVD medium 140, in the AV content format shown in Fig. 2 (Step S503).

Subsequently, the title key file processing unit 121 checks whether any title key file is present on the DVD medium 140 (step S504). When no title key file is present on the DVD medium 140 (step S504: No), the title key file processing unit 121 generates a title key file on the DVD medium 140 (step S505).

On the other hand, when a title key file is present on the DVD medium 140 at step S504 (step S504: Yes), the title key file processing unit 121 does not perform the title key file generation processing.

Next, the title key file processing unit 121 searches for a vacant record field in the title key file and determines that the vacant record field found in the search is the record field into which the title key is to be recorded (step S506). The title key file processing unit 121 then encrypts the title key with a device secret key stored in the device secret key storing unit 127 (step S507). The recording unit 113 registers the title key that has been encrypted (i.e. the encrypted title key) into the vacant record field in the title key file determined at step S506 (step S508).

Accordingly, the title content and the title key have been recorded on the DVD medium 140. In Fig. 5, the processing in which the title content is encrypted and recorded onto the DVD medium is explained, however, when the copy control information of the content to be recorded is indicated as "Copy Free", the title content is recorded onto the DVD medium 140, while remaining in plain text, without being encrypted. In such a situation, the key number field in the header portion of the AV content is set to "0", as described above, and also the copy control information is specified as "Copy Free".

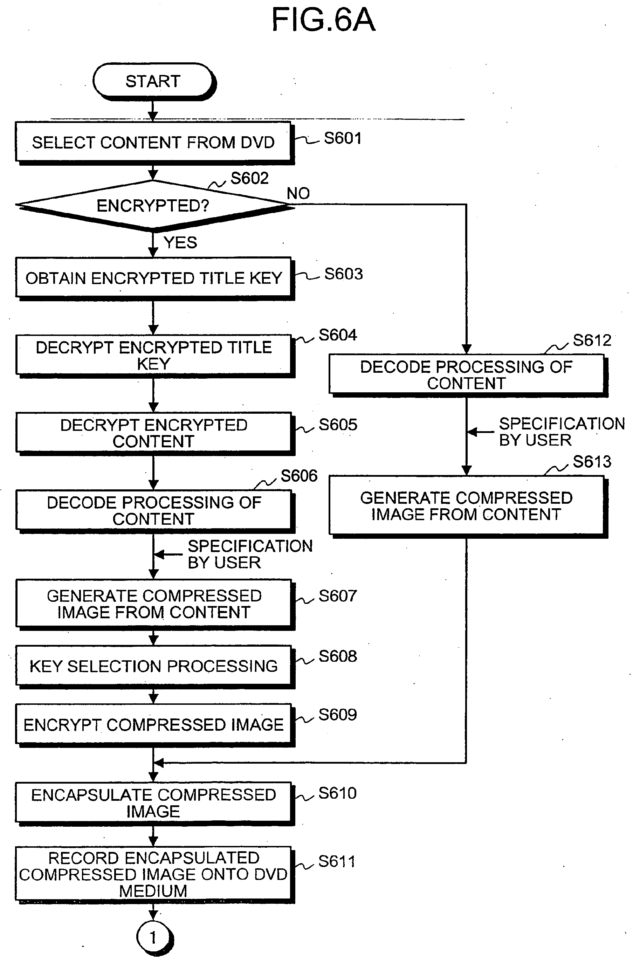

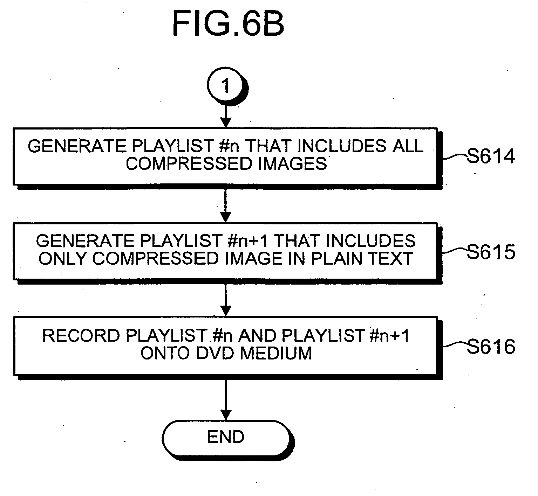

Next, the processing of generating adjunct data and generating a playlist will be explained. Fig. 6A and Fig. 6B present a flow chart of a procedure in the adjunct data generation processing and the playlist generation processing performed by the DVD recorder according to the first embodiment.

To be more specific, the adjunct data generation processing is, for example, to generate a thumbnail image or a background image to be used in a menu screen as adjunct data, from a title content in an AV content recorded on the DVD medium 140, and to generate a playlist that includes the thumbnail image or the background image.

As an initial state of the DVD medium 140, let us assume that the AV content and the title key file have been recorded on the DVD medium 140, as a result of the processing explained with reference to Fig. 5. There is a possibility that the single DVD medium 140 has recorded thereon both some AV contents that include encrypted title contents and some AV contents that include unencrypted title contents, in a mixed manner. Thus, the first embodiment is based on a premise that both types of AV contents have been recorded on the DVD medium in a mixed manner. To be more specific, the first embodiment is based on a premise that, for example, each of the title contents in the AV content #1 and the AV content #2 has been encrypted with a title key, whereas the title content in the AV content #3 is in plain text.

Firstly, the host unit 120 selects an AV content that includes an extraction-source title content from which adjunct data is extracted (step S601).

Next, the key selecting unit 124 refers to the management file recorded on the DVD medium 140 and checks whether the title content has been encrypted (step S602). To be more specific, the judgment is made based on whether the key number corresponding to the extraction-source AV content in the management file is "0" or not, as explained above.

When the title content is in plain text (step S602: No), the AV data decoding unit 125 decodes the title content in the AV content (Step S612). When a desired range is specified according to a specification by a user or the setting in the device, the image generation processing unit 126 extracts, as a still image, image data to be played back during a predetermined period of time specified as the playback period, out of the decoded title content, and converts the extracted image data into a compressed image format so as to generate a compressed image (step S613). The compressed image generated in this manner is used as the adjunct data.

On the other hand, when the key selecting unit 124 judges that the title content has been encrypted, at step S602 (step S602: Yes), the title key file processing unit 121 refers to the management file and obtains the encrypted title key, out of the title key file (step S603).

Next, the title key file processing unit 121 decrypts the obtained encrypted title key with the device secret key stored in the device secret key storing unit 127 (step S604).

Subsequently, the decryption processing unit 122 decrypts the encrypted title content with the title key that is in plain text after having been decrypted and the copy control information included in the AV content (Step S605). In this situation, to perform the decryption process, a part of the copy control information (for example, a number of bits) is used.

Another arrangement is acceptable in which the decryption processing unit 122 checks, when performing the decryption processing of the title content, whether the encrypted title key specified in the management file matches the key that is used for encrypting the actual title content, by making a comparison with the value in the key number field included in the header portion of the AV content.

Next, the AV data decoding unit 125 decodes the title content that is now in plain text (step S606). When a desired range is specified according to a specification by a user, the image generation processing unit 126 extracts, as a still image, image data to be played back during a predetermined period of time specified as the playback period, out of the decoded title content, and converts the extracted image data into a compressed image format so as to generate a compressed image (step S607). The compressed image generated in this manner is used as the adjunct data.

Subsequently, the key selecting unit 124 selects the title key used for encrypting the adjunct data, out of the title key file recorded on the DVD medium 140. Alternatively, the key selecting unit 124 may perform a key selection processing so as to newly generate a title key used for encrypting the adjunct data (step S608).

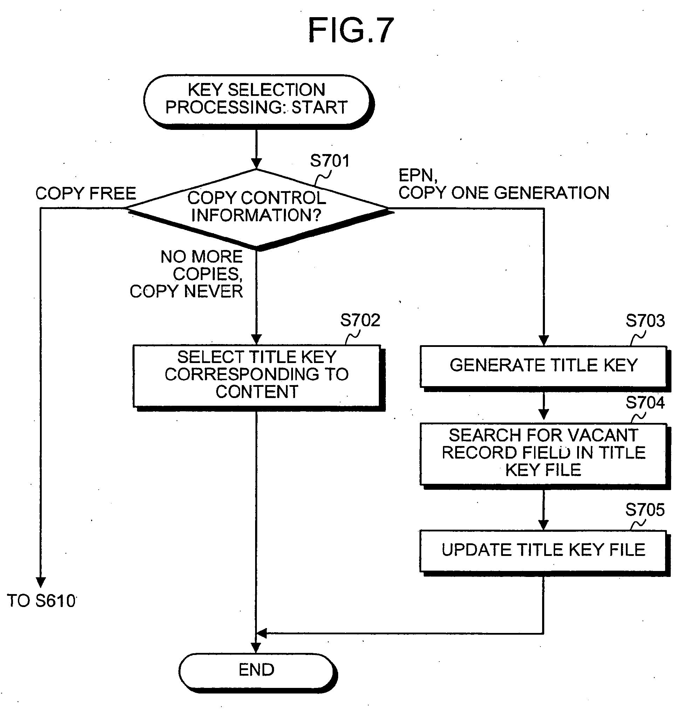

Next, the details of the key selection processing will be explained. Fig. 7 is a flow chart of the procedure in the key selection processing performed by the key selecting unit 124 included in the DVD recorder according to the first embodiment.

Firstly, the key selecting unit 124 checks what is indicated by the copy control information of the AV content that includes the extraction-source title content from which the adjunct data is extracted (step S701). When the copy control information indicates a copy limitation such as "No More Copies" or "Copy Never", the key selecting unit 124 selects, out of the title key file, a title key (i.e. an encrypted title key) that corresponds to the extraction-source title content (step S702). To select the title key, as shown in the example in Fig. 4, reference is made to the key number that corresponds to the AV content including the title content and that has been registered in the management file recorded on DVD medium 140.

When the copy control information indicates "Copy Free", the adjunct data is recorded onto the DVD medium 140, while remaining in plain text without being decrypted, through the processing at steps S602 (No), S612, S613, S610, and S611 shown in Fig. 6A. However, even if it is judged that the content is encrypted at step S601 and the copy control information indicates "Copy Free" at step S701, in some reason, in the key selection processing, no title key is selected, and the key selection processing is finished without encrypting the adjunct data, so that the procedure returns to step S610. With this arrangement, the adjunct data is recorded onto the DVD medium 140 while remaining in plain text.

On the other hand, at step S701, when the copy control information indicates that there is no copy limitation or copying is allowed with a limitation, such as "EPN" or "Copy One Generation", the key selecting unit 124 newly generates a title key (Step S703). Then, the title key file processing unit 121 searches for a vacant record field in the title key file recorded on the DVD medium 140 (Step S704). The title key file processing unit 121 encrypts the newly generated title key with the device secret key. Subsequently, the recording unit 113 records the new title key that has been encrypted into the vacant record field in the title key file, so as to update the title key file (step S705).

In the description of the first embodiment, the copy control information is subject to judgment, and when the copy control information indicates that there is no copy limitation or copying is allowed with a limitation, such as "EPN" or "Copy One Generation", a title key is newly generated, so that the adjunct data is encrypted with the newly generated title key, however, the present invention is not limited to this example.

For example, even if the copy control information indicates that there is no copy limitation or copying is allowed with a limitation, such as "EPN" or "Copy One Generation", it is acceptable to use the same key as the title key corresponding to the title content from which the adjunct data is extracted, for encrypting the adjunct data, like in the case where the copy control information indicates "No More Copies" or "Copy Never". In other words, as long as the title content is encrypted, the same key as the title key corresponding to the title content may be used for encrypting the adjunct data, regardless of the type of the copy control information. In such a situation, the judgment processing on the copy control information at step S701 does not have to be performed except Copy Free judgment.

Additionally, in the description above, the host unit 120 in the DVD recorder includes the setting information storing unit 128, however, it is also acceptable to configure the DVD recorder so as to include a setting information storing unit that stores therein setting information indicating whether the same key as the title key corresponding to the title content from which the adjunct data is extracted should be used for encrypting the adjunct data, when the copy control information indicates that there is no copy limitation or copying is allowed with a limitation, such as "EPN" or "Copy One Generation", so that a title key is selected by referring to the setting information when the copy control information indicates "EPN", "Copy One Generation", or the like.

Returning to the description of Fig. 6A, when the title key used for encrypting the adjunct data has been selected through the key selection processing at step S608, the encryption processing unit 123 encrypts a compressed image that serves as the adjunct data with the title key that has been either selected or generated at step S608 (step 5609).

Then, the recording unit 113 encapsulates the encrypted compressed image, i.e. the encrypted adjunct data, into a single file together with a file ID, the key number of the title key used in the encryption process, and the file size (step S610). The recording unit 113 then records, as a file, the encrypted adjunct data, which is encapsulated compressed image, onto the DVD medium 140 (step S611).

Next, the procedure moves to the playlist generation processing. The playlist generating unit 128 generates a playlist #n that structures a menu screen including all the pieces of adjunct data that are in correspondence with the title content being the playback target, out of the title contents recorded on the DVD medium 140. In other words, the playlist #n structures the menu screen including both the adjunct data (compressed image data) that has been encrypted in correspondence with the title content being the playback target and the adjunct data (compressed image data) that is in plain text (step S614).

Next, the playlist generating unit 128 generates a playlist #n+1 that structures a menu screen including only the adjunct data in plain text that corresponds to the title content in plain text, out of the pieces of adjunct data that are in correspondence with the title content being the playback target (step S615).

In this situation, when generating the playlist #n+1 that includes only the adjunct data in plain text, the playlist generating unit 128 puts link information into the playlist #n+1, the link information referring to the playlist #n that includes all the pieces of adjunct data.

Also, the playlist generating unit 128 arranges the suffix number appended to the file name of the playlist generated at step S615 to be #n+1, which has a larger value than the suffix number #n appended to the file name of the playlist generated at step S614.

Subsequently, the recording unit 113 records the two playlists, namely the playlist #n and the playlist #n+1, onto the DVD medium 140 (Step S616). With this arrangement, even a DVD player that is not capable of the copyright protection function is able to play back only the title content in plain text, according to the playlist #n+1, from the DVD medium 140 on which both the title content that has been encrypted and the title content that is in plain text have been recorded in a mixed manner.

Next, the state of the two playlists that have been recorded on the DVD medium 140 will be explained. In the following explanation, the playlist #n that structures a menu screen including all the pieces of adjunct data (the compressed image data) will be referred to as a playlist #2, whereas the playlist #n+1 that structures a menu screen including only the adjunct data (the compressed image data) in plain text will be referred to as a playlist #3.

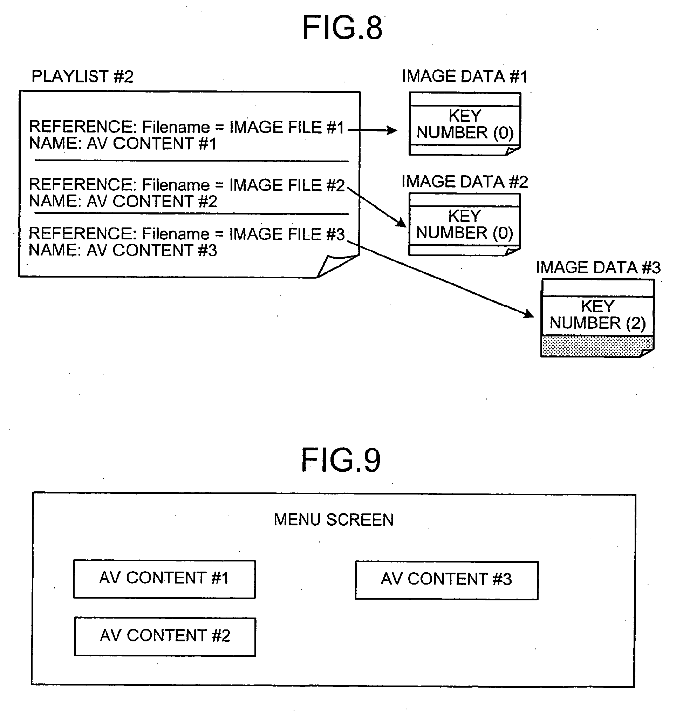

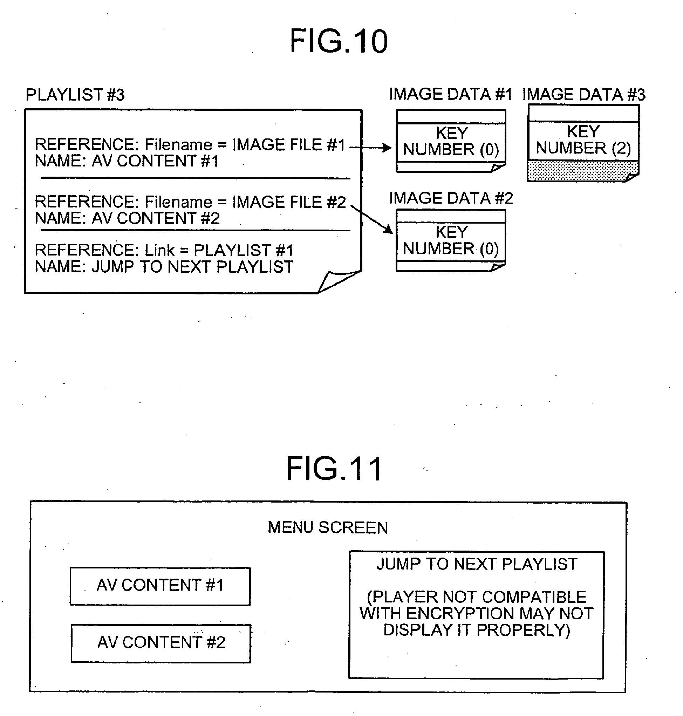

As shown in Fig. 8, the playlist #2 includes the encrypted adjunct data. On the other hand, as shown in Fig. 10, the playlist #3 includes no encrypted adjunct data. In other words, the image data #3, which is the adjunct data included in the playlist #2, has been encrypted. As shown in Fig. 9, the image data #3 is displayed on the menu screen, but a DVD recorder that does not store therein the device secret key is not able to play back the image data #3.

On the other hand, the playlist #3 includes only the adjunct data in plain text. Thus, the menu screen does not include the image data #3 that has been encrypted. Accordingly, even a DVD player or a DVD recorder that does not store therein the device secret key is able to display the menu screen properly, as shown in Fig. 11.

Further, the file names are generated so that the suffix number appended to the file name of the playlist #3 has a larger value than the suffix number appended to the file name of playlist #2. Accordingly, the playlist #3 will be always loaded and played back before the playlist #2 no matter what type of DVD player or DVD recorder is used.

In addition, according to the first embodiment, as shown in Fig. 10, the playlist #3 includes a link to the playlist #2 that includes the encrypted adjunct data. Thus, on the menu screen of the playlist #3, a button for jumping to the playlist #2 is displayed, instead of a display of the image data #3 that has been encrypted.

As explained so far, when the DVD recorder according to the first embodiment is used, two playlists, namely, a playlist that includes all the pieces of adjunct data of the playback target and a playlist that includes only the adjunct data in plain text are generated from the DVD medium 140 on which both the adjunct data that has been encrypted and the adjunct data that is in plain text have been recorded in a mixed manner. In addition, the suffix number appended to the file name of the playlist that includes only the adjunct data in plain text is arranged to have a larger value than the suffix number appended to the file name of the playlist that includes all the pieces of adjunct data. With these arrangements, even a DVD player or a DVD recorder that is not capable of the copyright protection function is able to play back the content according to the playlist, while the copyrights of the adjunct data and the title content are protected.

When generating the playlist #n+1 that includes only the adjunct data in plain text, the playlist generating unit 128 puts the link information into the playlist #n+1, the link information referring to the playlist #n that includes all the pieces of adjunct data. However, it is also acceptable to generate the playlist #n+1 so as to simply include only the adjunct data (the image data) in plain text, without putting the link information into it. In this situation, on the menu screen of the playlist #n+1, the button for jumping to the playlist #n, as shown in Fig. 11, will not be displayed.

It is also acceptable to configure the playlist generating unit 128 so as to generate the playlist #n+1 only indicating that an encrypted content has been recorded on the DVD medium 140, because a DVD player that does not store therein the device secret key and that is not capable of the copyright protection function is not able to play back the encrypted adjunct data.

In an example of such a situation, a DVD recorder will be able to use image data in plain text that is stored in the DVD recorder itself to indicate that an encrypted content has been recorded on the DVD medium 140 but the DVD recorder is not able to play back the encrypted content, in place of the encrypted adjunct data.

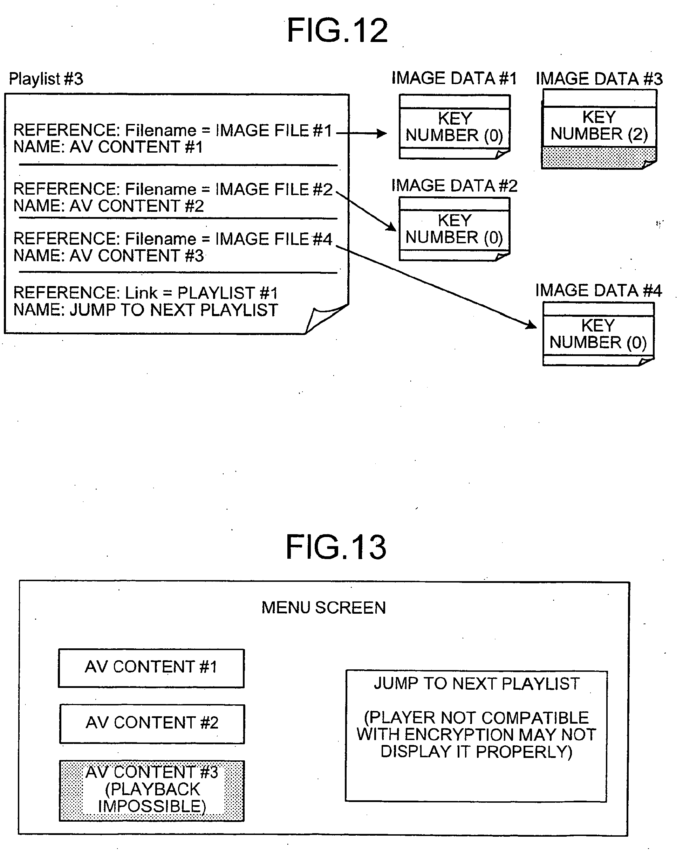

As shown in Fig. 12, the playlist #3 is generated so as to include the image data #4 in plain text, in place of the image data #3, which is encrypted adjunct data. Further, as shown in Fig. 13, on the menu screen generated with the playlist #3, the image data #4 in plain text and a message indicating that playback is impossible will be displayed as an image corresponding to the AV content #3 that has been encrypted. With these arrangements, a user of a DVD player that does not store therein the device secret key and that is not capable of the copyright protection function is able to have the content in plain text played back properly according to the playlist, while understanding that the contents recorded on the DVD medium 140 include some contents of which the playback is not possible.

Alternatively, in such a situation, if the AV content #3 includes a portion that is in plain text, it is acceptable to configure the playlist generating unit 128 so as to use the image data in plain text included in the AV content #3 as the image data that indicates the AV content #3 that has been encrypted. When a compressed image is generated using image data in plain text, like in this example, the compressed image will not be encrypted. Thus, even a DVD player or a DVD recorder that does not store therein the device secret key is able to play back the compressed image. Accordingly, it is sufficient to generate only the playlist #3 that includes all the image files and record the playlist #3 onto the DVD medium 140, without generating a playlist that corresponds to the playlist #2. Alternatively, it is also sufficient to record a playlist that corresponds to the playlist #3 so as to overwrite the playlist #1 with it.

Also, in such a situation, if the playlist #1 that has been recorded on the DVD medium 140 will not be referred to, but the playback of the title content referred to by the playlist #1 is guaranteed, it is acceptable to configure the playlist generating unit 128 so as to connect a link for jumping from one of the playlist #3 and the playlist #2 to the playlist #1.

When the contents recorded on the DVD medium 140 are edited after the playlist #1 is generated so that the AV content #1 or the AV content #2 is deleted, the playist #1 will be incomplete and playback using the playlist #1 will not be guaranteed. When the playback using the playlist #1 is not guaranteed, like in this example, it is acceptable to configure the playlist generating unit 128 so as to overwrite the playlist #1 without leaving any remainder and to generate two playlists, namely, a playlist #1 that includes all the pieces of adjunct data and a playlist #2 that includes only the adjunct data in plain text.

On the other hand, when another content is simply written onto the DVD medium 140 additionally, the content that is additionally written will not be displayed on the menu screen of the playlist #1. However, the contents that have been originally recorded on the DVD medium 140 from before the time when the additional writing is performed will not change, and it is possible to play back those contents according to the playlist #1. Thus, it is also acceptable to configure the playlist generating unit 128 so as to generate one of the playlist #3 and the playlist #2 to which a link for jumping to the playlist #1 is connected.

Next, a second embodiment of the invention will be explained.

The DVD recorder according to the first embodiment generates the playlists so that a DVD player or a DVD recorder that does not store therein the device secret key and that is not capable of the copyright protection function is able to play back a title content. A DVD recorder according to the second embodiment generates, depending on whether any playlist is present on the DVD medium, a playlist that only a DVD player or a DVD recorder that is capable of the copyright protection function is able to play back.

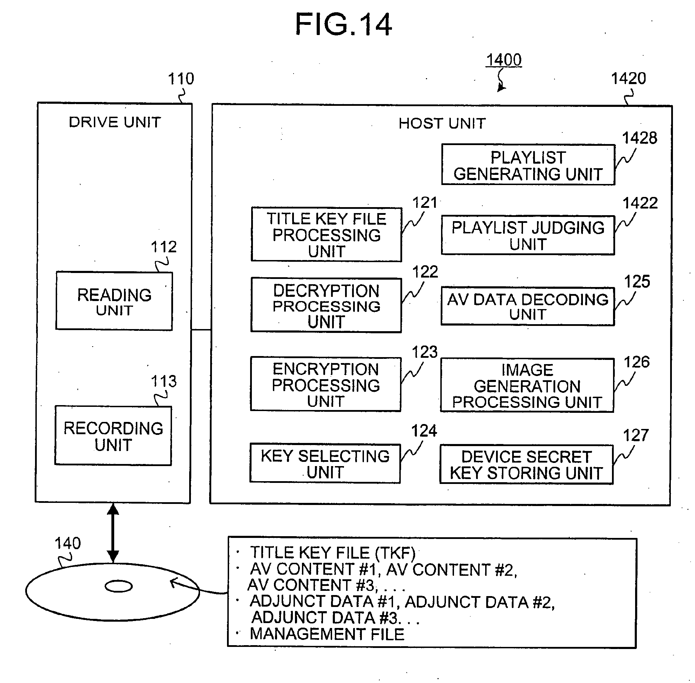

As shown in Fig. 14, a DVD recorder 1400 according to the second embodiment includes the drive unit 110 that records data onto the DVD medium 140 and also reads data from the DVD medium 140, and a host unit 1420 that performs an encryption processing and a decryption processing of a title content and a title key, a processing of generating adjunct data from a decrypted title content, and a processing of generating a playlist. Also, like in the first embodiment, the drive unit 110 and the host unit 1420 are connected to each other by a general-use bus or a special proprietary bus.

Like in the first embodiment, the DVD medium 140 has recorded thereon, in the form of files, the title key file (TKF), the plurality of AV contents (the AV content #1, the AV content #2, and the AV content #3), the pieces of adjunct data (the adjunct data #1, the adjunct data #2, ...), and the management file. According to the second embodiment, the DVD medium 140 is different from the DVD medium according to the first embodiment in that the playlist (i.e. the playlist #1) has not been recorded on the DVD medium.

In the DVD recorder 1400 according to the second embodiment, the drive unit 110 is configured in the same manner as in the first embodiment. The DVD recorder 1400 according to the second embodiment is different from the DVD recorder 100 according to the first embodiment in that the host unit 1420 includes a playlist judging unit 1422, and also a playlist generating unit 1428 has functions that are different from the functions described in the first embodiment. The other constituent elements of the host unit 1420, namely, the title key processing unit 121, the decryption processing unit 122, the encryption processing unit 123, the AV data decoding unit 125, the image generation processing unit 126, and the device secret key storing unit 127, are the same as in the first embodiment.

The playlist judging unit 1422 is a processing unit that judges whether one or more playlists are present on the DVD medium 140. When one or more playlists are present on the DVD medium 140, the playlist judging unit 1422 judges whether the playlist that is to be loaded and played back first among the playlists that have been recorded on the DVD medium 140 includes encrypted adjunct data.

When no playlist is present on the DVD medium 140, the playlist generating unit 1428 generates only a first playlist that includes adjunct data that has been encrypted and adjunct data that is in plain text. When one or more playlists are present on the DVD medium 140 and if the playlist to be played back first includes encrypted adjunct data, the playlist generating unit 1428 generates only the first playlist.

The processing of generating a title content and the processing of generating adjunct data are performed by the DVD recorder 1400 according to the second embodiment in the same manner as in the first embodiment. According to the second embodiment, the processing of generating the playlists is different from the one according to the first embodiment.

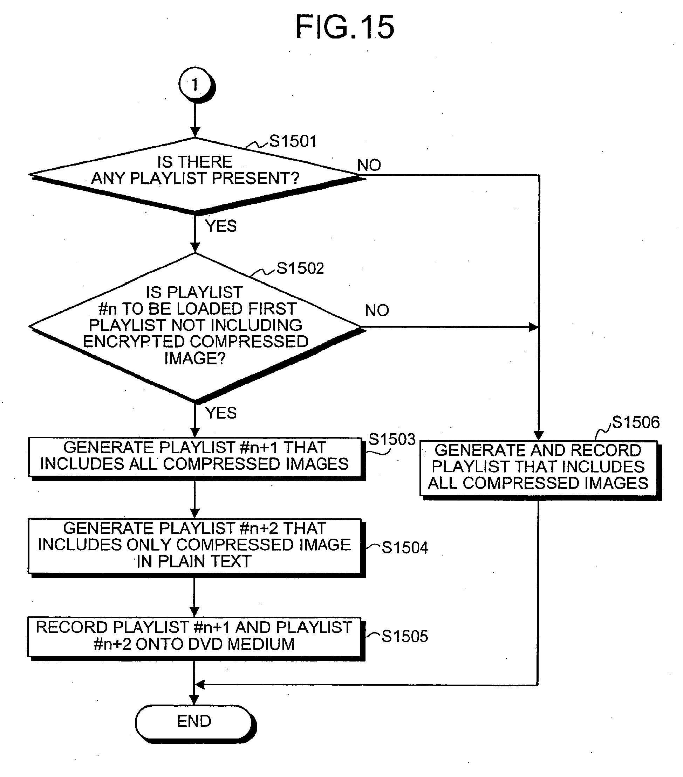

Next, the processing of generating playlists performed by the DVD recorder 1400 according to the second embodiment will be explained. Fig. 15 is a flow chart of a procedure in the playlist generation processing performed by the DVD recorder 1400 according to the second embodiment. The playlist generation processing explained below may be performed after the adjunct data has been recorded on a DVD medium shown in FIG. 6A in the first embodiment. Alternatively, when adjunct data is already present, the playlist generation processing may be performed as a processing to generate only a playlist, independently of the processing shown in Fig. 6A. In the example below, the processing will be explained as the one to follow the processing shown in Fig. 6A.

First, the playlist judging unit 1422 checks whether one or more playlists are present on the DVD medium 140 (step S1501).

When no playlist is present on the DVD medium 140 (step S1501: No), the playlist generating unit 1428 generates only the first playlist (i.e. a playlist #n) that includes all the pieces of adjunct data that are in correspondence with the title content being the playback target, namely, the adjunct data that has been encrypted and the adjunct data that is in plain text. The recording unit 113 then records the generated first playlist onto the DVD medium 140 (step S1506).

On the other hand, at step S1501, when one or more playlists are present on the recording medium 140 (step S1501: Yes), the playlist judging unit 1422 checks whether the playlist to be loaded and played back first among the playlists that have been recorded on the DVD medium 140 does not include encrypted adjunct data (step S1502).

Methods that can be used to detect whether the playlist includes encrypted adjunct data, in other words, to detect whether encrypted adjunct data is present on the DVD medium 140 includes: to detect whether a title key file is present; to judge from the reference destinations of the playlists that are already present on the DVD medium 140; to search the DVD medium 140 for a file that stores therein an extension of a file in which encrypted adjunct data has been encapsulated; to search in a title key file for a valid title key, when an arrangement is made so that the title key for encrypted adjunct data is managed by an adjunct data title key file and if such an adjunct data title key file is present; and a method in which any of these methods are combined.

At step S1502, when the playlist to be loaded and played back first among the playlists that have been recorded on the DVD medium 140 includes encrypted adjunct data (step S1502: No), the playlist generating unit 1428 generates only the first playlist (i.e. the playlist #n) that includes all the pieces of adjunct data that are correspondence with the title content being the playback target, namely, the adjunct data that has been encrypted and the adjunct data that is in plain text, and the first playlist is recorded onto the DVD medium 140 (step S1506).

With these arrangements, when no playlist is present on the DVD medium 140 or when a playlist that includes encrypted adjunct data is already present on the DVD medium 140, only the first playlist (the playlist #n) that includes the adjunct data that has been encrypted and the adjunct data that is in plain text is recorded onto the DVD medium 140. Thus, it is not possible to play back the contents recorded on the DVD medium according to the playlists, unless a DVD player or a DVD recorder is capable of the copyright protection function.

On the other hand, at step S1502, when the playlist that is to be loaded and played back first among the playlists that have been recorded on the DVD medium 140 includes no encrypted adjunct data (step S1502: Yes), the playlist generating unit 1428 generates a playlist #n+1 that structures a menu screen including all the pieces of adjunct data that are in correspondence with the title content being the playback target out of the title contents having been recorded on the DVD medium 140, namely, the adjunct data (the compressed image data) that has been encrypted in correspondence with the title content being the playback target and the adjunct data (the compressed image data) that is in plain text (step S1503).

Next, the playlist generating unit 1428 generates a playlist #n+2 that structures a menu screen including only the adjunct data in plain text that corresponds to the title content in plain text, out of the pieces of adjunct data that are in correspondence with the title content being the playback target (step S1504).

Like in the first embodiment, when generating the playlist #n+2 that includes only the adjunct data in plain text, the playlist generating unit 1428 may put link information into the playlist #n+2, the link information referring to the playlist #n+1 that includes all the pieces of adjunct data.

The playlist generating unit 1428 also arranges the suffix number, namely #n+2, that is appended to the file name of the playlist generated at Step S1504 to have a larger value than the suffix number, namely #n+1, that is appended to the file name of the playlist generated at step S1503.

The recording unit 113 records the two playlists, namely the playlist #n+1 and the playlist #n+2 onto the DVD medium 140 (step S1505). With these arrangements, even a DVD player that is not capable of the copyright protection function is able to play back only the title content in plain text according to the playlist #n+2, from the DVD medium 140 on which the title content that has been encrypted and the title content that is in plain text have been recorded in a mixed manner.

As explained so far, when the DVD recorder according to the second embodiment is used, only if one or more playlists that each include only adjunct data in plain text are present on the DVD medium 140, both the first playlist that includes the adjunct data that has been encrypted and the adjunct data that is in plain text and the second playlist that structures a menu screen including only the adjunct data in plain text are recorded onto the DVD medium 140. Thus, even a DVD player or a DVD recorder that is not capable of the copyright protection function is able to play back the contents recorded on the DVD medium according to the playlist.

Next, a third embodiment of the invention will be explained.

The DVD recorder according to the second embodiment generates, depending on whether one or more playlists are present on the DVD medium, a playlist that only a DVD player or a DVD recorder that is capable of the copyright protection function is able to play back. A DVD recorder according to the third embodiment generates, depending on the setting in the DVD recorder, a playlist that only a DVD player or a DVD recorder that is capable of the copyright protection function is able to play back.

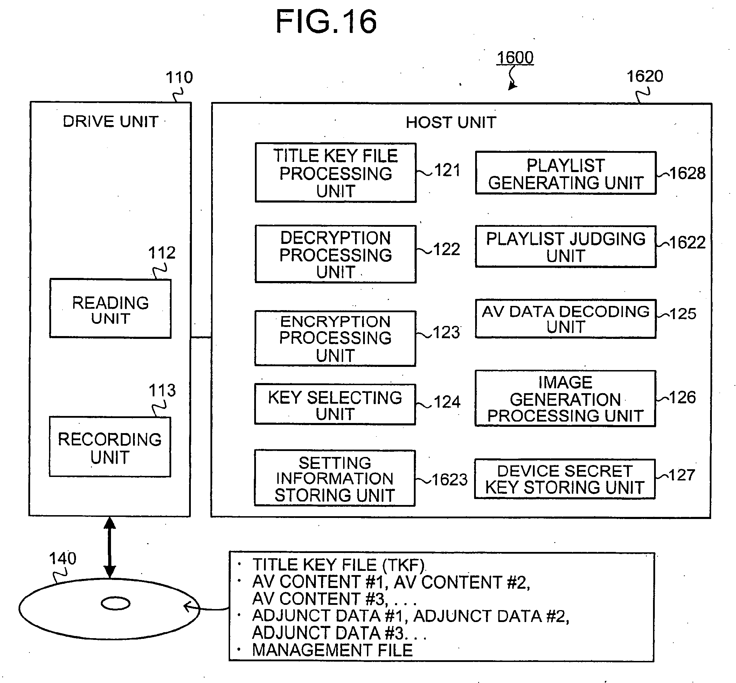

As shown in Fig. 16, a DVD recorder 1600 according to the third embodiment includes, the drive unit 110 that records data onto the DVD medium 140 and also reads data from the DVD medium 140, and a host unit 1620 that performs an encryption processing and a decryption processing of a title content and a title key, a processing of generating adjunct data from a decrypted title content, and a processing of generating a playlist. Also, like in the first and the second embodiments, the drive unit 110 and the host unit 1620 are connected to each other by a general-use bus or a special proprietary bus.

Like in the second embodiment, the DVD medium 140 has recorded thereon, in the form of files, the title key file (TKF), the plurality of AV contents (the AV content #1, the AV content #2, and the AV content #3), the pieces of adjunct data (the adjunct data #1, the adjunct data #2, ...), and the management file.

In the DVD recorder 1600 according to the third embodiment, the drive unit 110 is configured in the same manner as in the first embodiment. The DVD recorder 1600 according to the third embodiment is different from the second embodiment in that the host unit 1620 includes a setting information storing unit 1623, and also a playlist generating unit 1628 and a playlist judging unit 1622 have functions that are different from the functions described in the second embodiment. The other constituent elements of the host unit 1620, namely, the title key processing unit 121, the decryption processing unit 122, the encryption processing unit 123, the AV data decoding unit 125, the image generation processing unit 126, and the device secret key storing unit 127, are the same as in the first and the second embodiments.

The setting information storing unit 1623 is a storing medium, such as a memory, that stores therein setting information indicating whether a mode for generating a playlist that includes adjunct data in plain text is turned on or off. The setting information is set by a user during an initial setting process of the DVD recorder or the like.

The playlist judging unit 1622 is a processing unit that judges what is indicated by the setting information. When the mode that is indicated in the setting information and is for generating a playlist that includes adjunct data in plain text is turned off, the playlist generating unit 1628 generates only a first playlist that includes adjunct data that has been encrypted and adjunct data that is in plain text. When the mode that is indicated in the setting information and is for generating a playlist that includes adjunct data in plain text is turned on, the playlist generating unit 1628 generates the first playlist that includes the adjunct data that has been encrypted and the adjunct data that is in plain text and a second playlist that includes only the adjunct data in plain text.

The processing of generating a title content and the processing of generating adjunct data are performed by the DVD recorder 1600 according to the third embodiment in the same manner as in the first and the second embodiments. According to the third embodiment, the processing of generating the playlists is different from the one according to the first and the second embodiments.

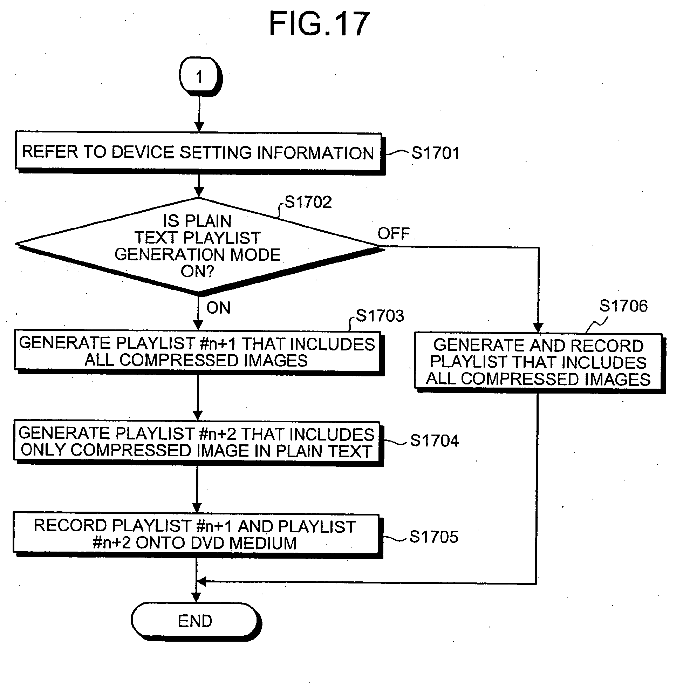

Next, the processing of generating the playlists performed by the DVD recorder 1600 according to the third embodiment will be explained. Fig. 17 is a flow chart of a procedure in the playlist generation processing performed by the DVD recorder 1600 according to the third embodiment.

Through the processing explained with reference to Fig. 6A in the description of the first embodiment, the adjunct data has been recorded on the DVD medium. Then, the playlist judging unit 1622 refers to the setting information that is stored in the setting information storing unit 1623 (step S1701). The playlist judging unit 1622 checks for the mode that is indicated in the setting information and is for generating a playlist that includes adjunct data in plain text (step S1702).

When the mode that is indicated in the setting information and is for generating the playlist that includes the adjunct data in plain text is turned off (step S1702: OFF), the playlist generating unit 1628 generates only the first playlist (a playlist #n) that includes all the pieces of adjunct data that are in correspondence with a title content being a playback target, namely, the adjunct data that has been encrypted and the adjunct data that is in plain text. Then, the recording unit 113 records the generated first playlist onto the DVD medium 140 (S1706).

With this arrangement, according to the setting information, only the first playlist (i.e. the playlist #n) that includes the adjunct data that has been encrypted and the adjunct data that is in plain text has been recorded onto the DVD medium 140. Thus, it is not possible to play back the contents recorded on the DVD medium according to the playlists, unless a DVD player or a DVD recorder is capable of the copyright protection function.

On the other hand, when the mode that is indicated in the setting information and is for generating a playlist that includes adjunct data in plain text is turned on (step S1702: ON), the playlist generating unit 1628 generates a playlist #n+1 that structures a menu screen including all the pieces of adjunct data that are in correspondence with the title content being the playback target, out of the title contents that have been recorded on the DVD medium 140, namely, adjunct data (compressed image data) that has been encrypted in correspondence with the title content being the playback target and adjunct data (compressed image data) that is in plain text (step S1703).

Next, the playlist generating unit 1628 generates a playlist #n+2 that structures a menu screen including only the adjunct data in plain text that is in correspondence with the title content in plain text, out of the pieces of adjunct data that are in correspondence with the title content being the playback target (Step S1704).

In this situation, like in the first embodiment, when generating the playlist #n+2 that includes only the adjunct data in plain text, the playlist generating unit 1628 may put link information into the playlist #n+2, the link information referring to the playlist #n+1 that includes all the pieces of adjunct data.

The playlist generating unit 1628 also arranges the suffix number, namely #n+2, that is appended to the file name of the playlist generated at Step S1704 to have a larger value than the suffix number, namely #n+1, that is appended to the file name of the playlist generated at step S1703.

The recording unit 113 records the two playlists, namely the playlist #n+1 and the playlist #n+2 onto the DVD medium 140 (step S1705). With these arrangements, even a DVD player that is not capable of the copyright protection function is able to play back only the title content in plain text according to the playlist #n+2, from the DVD medium 140 on which the title content that has been encrypted and the title content that is in plain text have been recorded in a mixed manner.

As explained so far, when the DVD recorder according to the third embodiment is used, it is possible to switch, according to the setting information stored in the DVD recorder, between (a) recording, onto the DVD medium 140, only the first playlist that includes the adjunct data that has been encrypted and the adjunct data that is in plain text and (b) recording, onto the DVD medium 140, the first playlist and also the second playlist that includes only the adjunct data in plain text. Thus, it is possible to make the DVD recorder more convenient for the user, while the copyrights of the adjunct data and the contents are protected.

In the DVD recorders according to the first through the third embodiments, the title key used for encrypting the adjunct data is managed in the title key file used for encrypting the title content. However, another arrangement is acceptable in which the title key used for encrypting the adjunct data is separately managed in another title key file designated for the adjunct data.

According to the first through the third embodiment, when the adjunct data has been generated from a title content of which the copy control information indicates "Copy One Generation" or "EPN", the title key used for encrypting the adjunct data is newly generated. However, another arrangement is acceptable in which the adjunct data is encrypted with a title key that corresponds to the title content being the extraction source, i.e. with the title key that is used for encrypting the title content being the extraction source.

Of the two title keys, namely a title key used for encrypting the adjunct data generated from a title content of which the copy control information indicates "Copy One Generation" and a title key used for encrypting the adjunct data generated from a title content of which the copy control information indicates "EPN", one of the title keys may be a newly generated title key, and the other may be a title key that corresponds to the title content being the extraction source.

The content recording computer program executed by the DVD recorders according to the first through the third embodiments is provided as being incorporated in advance into a ROM or the like.

The content recording computer program executed by the DVD recorders according to the first through the third embodiments may be provided as being recorded on a computer-readable recording medium such as a Compact Disk Read Only Memory (CD-ROM), a Flexible Disk (FD), a Compact Disk Recordable (CD-R), or a DVD, in a file that is in an installable format or in an executable format.

The content recording computer program that is executed by the DVD recorders according to the first through the third embodiments may be stored in a computer connected to a network like the Internet and provided as being downloaded via the network. Also, the content recording computer program that is executed by the DVD recorders according to the first and the second embodiments may be provided or distributed via a network like the Internet.

The content recording computer program that is executed by the DVD recorders according to the first through third embodiments is structured as a module that includes the constituent elements such as the host unit 120 and the drive unit 110, which are described above. In the actual hardware configuration, the constituent elements are loaded onto a main storage device and generated in the main storage device, when a Central Processing Unit (CPU) (i.e. a processor) reads and executes the content recording computer program from the ROM.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A content recording apparatus (100; 1400; 1600) comprising:
a reading unit (112) that reads, from a recording medium (140), a title content in plain text as a content of a program, a title key for encrypting the title content, an encrypted title content which is obtained by encrypting the title content with the title key, an adjunct data generated as being derived from the title content and encrypted in correspondence with the encrypted title content, and a plain text adjunct data that is data in plain text generated as being derived from the title content in plain text;
a playlist generating unit (128; 1428; 1628) that generates a first playlist including the encrypted adjunct data and the plain text adjunct data in correspondence with the title content as the playback target, and generates a second playlist including only the plain text adjunct data in correspondence with the title content in plain text from the adjunct data in correspondence with the title content as the playback target, wherein each of the first playlist and the second playlist defines an order in which the title content as a playback target is to be played back; and
a recording unit (113) that records the first playlist and the second playlist onto the recording medium (140).

2. The apparatus (1400) according to claim 1, further comprising:
a playlist judging unit (1422) that judges whether one or more of the playlists are present in the recording medium (140), wherein
the playlist generating unit (1428) generates the first playlist and the second playlist, when one or more of playlists are present in the recording medium (140), and when the playlist to be played back first does not include the encrypted adjunct data.

3. The apparatus (1400) according to claim 2, wherein
the playlist judging unit (1422) further judges whether the playlist to be played back first among the playlists recorded on the recording medium (140) includes the encrypted adjunct data, when one or more of the playlists are present in the recording medium (140), and
the playlist generating unit (1428) generates only the first playlist, when the playlist to be played back first includes the encrypted adjunct data.

4. The apparatus (1400) according to claim 3, wherein
the playlist judging unit (1422) judges whether the playlist to be played back first includes the encrypted adjunct data, based on one of: whether the title key for decrypting the adjunct data is present; whether a reference destination of the playlist includes the encrypted adjunct data; and whether a file which has an extension which indicates to be an encrypted adjunct data is present on the recording medium (140) and contains the encrypted adjunct data.

5. The apparatus (1600) according to claim 1, further comprising:
a device setting information storing unit (1623) that stores thereon setting information indicating whether the playlist including the plain text adjunct data is to be generated; and
a playlist judging unit (1622) that judges what is indicated by the setting information, wherein
the playlist generating unit (1628) generates only the first playlist, when the setting information indicates that the playlist including the plain text adjunct data is not to be generated, and
the recording unit (113) records only the first playlist onto the recording medium (140).

6. The apparatus (1600) according to claim 5, wherein
the playlist generating unit (1628) further generates the first playlist and the second playlist, when the setting information indicates that the playlist including the plain text adjunct data is to be generated.

7. The apparatus (100) according to claim 1, wherein
the playlist generating unit (128) arranges the playlists so that the second playlist is played back before the first playlist is played back by generating a file name of the second playlist with a suffix appended thereto, the suffix having a larger value than a suffix appended to a file name of the first playlist.

8. The apparatus (100) according to claim 1, wherein
the playlist generating unit (128) generates the second playlist so that the second playlist includes link information referring to the first playlist.

9. The apparatus (100) according to claim 1, wherein
the playlist generating unit (128) generates the second playlist so that the second playlist includes information indicating only presence of the encrypted title content and the second playlist does not include the encrypted adjunct data.

10. The apparatus (100) according to claim 9, wherein
the playlist generating unit (128) generates the second playlist so that the second playlist includes image data in plain text that serves as the information indicating only the presence of the encrypted title content and the second playlist does not include the encrypted adjunct data.

11. A content recording method comprising:
reading, from a recording medium (140), a title content in plain text as a content of a program, a title key for encrypting the title content, an encrypted title content which is obtained by encrypting the title content with the title key, an adjunct data generated as being derived from the title content and encrypted in correspondence with the encrypted title content, and a plain text adjunct data that is data in plain text generated as being derived from the title content in plain text;
generating a first playlist including the encrypted adjunct data and the plain text adjunct data in correspondence with the title content as the playback target;
generating a second playlist including only the plain text adjunct data in correspondence with the title content in plain text from the adjunct data in correspondence with the title content as the playback target, wherein each of the first playlist and the second playlist defines an order in which the title content as a playback target is to be played back; and
recording the first playlist and the second playlist onto the recording medium (140).

12. A computer program product having a computer readable medium including programmed instructions for recording content, wherein the instructions, when executed by a computer, cause the computer to perform:
reading, from a recording medium (140), a title content in plain text as a content of a program, a title key for encrypting the title content, an encrypted title content which is obtained by encrypting the title content with the title key, an adjunct data generated as being derived from the title content and encrypted in correspondence with the encrypted title content, and a plain text adjunct data that is data in plain text generated as being derived from the title content in plain text;
generating a first playlist including the encrypted adjunct data and the plain text adjunct data in correspondence with the title content as the playback target;
generating a second playlist including only the plain text adjunct data in correspondence with the title content in plain text from the adjunct data in correspondence with the title content as the playback target, wherein each of the first playlist and the second playlist defines an order in which the title content as a playback target is to be played back; and
recording the first playlist and the second playlist onto the recording medium (140).
